# EUROPEAN PATENT APPLICATION

(11) **EP 1 696 538 A1**
(43) Date of publication of application: **30.08.2006**
(21) Application number: 04723951.2
(22) Date of filing: 29.03.2004
(51) Int. Cl.: H02K 13/00, H02K 5/14

(54) **DC MOTOR WITH CARBON BRUSH POSITIONED OUTSIDE**

(30) Priority: 15.12.2003 CN 200320122564
(71) Applicant: Xu, Xiaohua, Dongyang, Zhejiang 322100 (CN)
(72) Inventor: Xu, Xiaohua, Dongyang, Zhejiang 322100 (CN)
(74) Representative: White, Duncan Rohan
(86) International application number: PCT/CN2004/000267
(87) International publication number: WO 2005/057759

(57) **Abstract**

This invention discloses a DC motor with externally mounted carbon brush, comprising a front end cover, a housing, magnetic steel, a rotor, a commutator and a back end cover, it is **characterized** that the outer wall of the back end cover is provided with two mounting holes for brush brackets which is mounted with annular brush brackets with identical structures, a radial sliding tube for carbon brush used to mount the carbon brush is located in said brackets, said carbon brush in the sliding tube for carbon brush contacts with the commutator by a spring biasing against the brush cap, the outward end thereof is connected with a copper sheet through a brush shunt, said copper sheet is held against the back end of the sliding tube by the copper sheet, the lead wire of power source is lead out from the outlet of the copper sheet at the outer wall of the sliding tube. The electrical connection of the carbon brush is lead out from the sliding tube through the brush shunt and the copper sheet, therefore the electrical connection is reliable. The present invention has such advantages that it is simply constructed and easily mounted, the volume thereof is small, the operation thereof is reliable, it is easy to maintain and replace and extends significantly the life of the motor.

## Description

### FIELD OF THE INVENTION

The present invention relates to a DC motor, in particularly to a DC motor with externally mounted carbon brush.

### DESCRIPTION OF THE RELATED ART

Currently, a brush motor as the most common DC motor in the market consists of a front end cover, a housing, a magnetic steel, a rotor, a commutator and a back end cover with a carbon brush, etc.. Because the carbon brush of such motor is internally mounted, once the assembly of the motor has been accomplished, the carbon brush is closed tightly by the back end cover, it is difficult to know when the brush carbon has been worn out during operation of the motor, even if there are some problems happened to the carbon brush, the carbon brush can not be replaced. Because the wear of the carbon brush can not be predicted during operation of the motor, it can not be determined when the carbon brush is worn out completely, we can not know the case that the carbon brush is worn out completely until the motor can not be in operation, however, once the carbon brush is worn out, it can not be repaired at all because the spring copper sheet has been worn out by the commutator to be broken and the commutator has been worn out to be damaged. So the DC motor used now is usually disposable, even if there are only some defects in the carbon brush while the other parts are in good condition so as to be recycled, the complete machine has to be thrown away, which results in a tremendous waste, and not only the service life of the motor becomes relatively short, but the cost is very high.

To solve the above-said problems, Chinese patent ZL01226334.6 discloses a DC micro-type motor with a replaceable brush, consisting of a housing, a magnet block, a rotor, a commutator and a back cover, two opposite semi-circlular mounting brackets for carbon brush with the identical structures are connected detachably, enclosely at the outer wall of the end portion of the housing, a radial sliding tube for the carbon brush with two opening at end thereof is provided in the central of the two semi-circular mounting bracket for carbon brush, the inner end of the sliding tube for carbon brush extends into the housing and directs to the commutator on the rotor, the outer end of the sliding tube for carbon brush is connected with the closure cover, the carbon brush in the sliding tube for carbon brush contacts with the commutaor by means of a spring biasing against the closure cover, a connecting lead on the carbon brush is led out from a core on the closure cover.

The above-mentioned solution solves advantageously replacement of the carbon brush, however, its connecting lead is directly welded to the end portion of the carbon brush and led out from the core on the closure cover, so that said connecting lead has to pass through the spring, said spring and said carbon brush are always in relative motion state during operation of the motor, therefore, such connection is not reliable so that the lead wire is liable to wear out and come off. More importantly, when the carbon brush is replaced, it has to be taken out together with the mounting bracket due to such leading mode used, therefore, the mounting bracket thereof is designed a pair of semi-circular, detachable structure enclosing the housing, which will occupy significant space and increase the volume of the complete machine.

Furthermore, there are two kinds of contacting surface i.e. sloping surface and arcuate shape surface between the conventional carbon brush and the commutator. It is well known that a film with suitable thickness is formed on the surface of the commutator, which consists of cuprous oxide and graphite chips and water etc. attached thereto when the motor is in normal operation. The film may increase contacting resistance of the commutator circuit while the graphite chips and water component contained in the film may play a role of lubricating the sliding contact. Although the film will be constantly damaged by wiping action produced by the carbon brush during operation of the motor, when current passes through the sliding contacting layer, a new film will be continually formed thereon because the oxygen and water is contained in the contacting layer due to relatively high temperature produced by the sliding contact therebetween and the carbon brush constantly releases crystal of graphite chips and carbon, once the damage and the reformation are balanced, a film will reach stable and normal state. If the temperature of the sliding contacting surface is too low or there are lack of oxygen, dryness and so on around it, once it is damaged, it is difficult for the film to be reformed, which causes the commutator to become damaged and produce spark and causes the carbon brush to produce such phenomena as quiver and noise etc.. There is a break-in stage between the carbon brush and the commutator, during this period, the motor noise is relatively large, the carbon brush with sloping-shaped contacting surface will shorten time of the break-in stage, and the area of the contacting surface between the carbon brush and the commutator is relatively small so that the noise will relatively low, however, there are some disadvantages in the carbon brush, that is, the area of the contacting surface between the carbon brush and the commutator is relatively small and the force acted on the carbon brush is asymmetric, which easily results in production of spark and locking of the motor. In accordance with carbon brush with arcuate shape contacting surface, the area of the contacting surface between the carbon brush and commutator is relatively large, therefore, the force acted on the carbon brush is relatively uniform, however, the area of the contacting surface between the carbon brush and the commutor is relatively large, so the noise produced during operation of the motor is relatively large and the break-in time is relatively much longer.

### SUMMARY OF THE INVENTION

The object of the present invention is to provide a DC motor with externally mounted carbon brush which is simply constructed and is easily reliable operated.

Additionally, the present invention also provides a DC motor with externally mounted carbon brush which is novelly constructed.

The solution used to address the problems presented above is to provide a DC motor with externally mounted carbon brush, comprising a front end cover, a housing, magnetic steel, a rotor, a commutator and a back end cover, it is characterized that the outer wall of the back end cover is provided with two mounting holes for brush brackets which is mounted with annular brush brackets with identical structures, a radial sliding tube for carbon brush used to mount the carbon brush is located in said brackets, said carbon brush in the sliding tube for carbon brush contacts with the commutator by a spring biasing against the brush cap, the outward end thereof is connected with a copper sheet through a brush shunt, said copper sheet is held against the back end of the sliding tube by the copper sheet, the lead wire of power source is lead out from the outlet of the copper sheet at the outer wall of the sliding tube.

In accordance with the present invention, the brush bracket thereof is directly inserted into the circular hole on the outer wall of the back end cover, therefore, the volume of the motor is very small so that it only occupys a little space. The electrical connection of the carbon brush is lead out from the sliding tube through the brush shunt and the copper sheet, and the brush shunt has excellent flexibility and extensibility, and the motion range thereof is limited between the end of the carbon brush and the brush cap, which results in relatively reliable electrical connection. When needed to observe the wear of the carbon brush and replace the carbon brush, the brush cap at he back end of the brush bracket is screwed off, the carbon brush is removed, subsequently we can learn the wear condition of the carbon brush at any time and replace it in time. Therefore, the DC motor with externally mounted according to the present invention, has such advantages that it is simply constructed and easily mounted, the volume thereof is small, the operation thereof is reliable, it is easy to maintain and replace and extends significantly the life of the motor.

As further improvement of the present invention, said contacting surface between the carbon brush and the commutator is formed into the arcuate shape surface with teeth. The tooth shape of said arcuate shape surface with teeth may be any one of tooth shape, such as zigzag shape, undee shape, rectangular shape or the combination thereof, preferably zigzag shape. Such carbon brush with arcuate shape surface having the teeth combines the advantages of the two kinds of carbon brushes provided with sloping shape surface and the arcuate shape surface respectively, several little teeth are machined on the arcuate shape surface of the arcuate shape carbon brush, therefore, not only the force may be uniformly acted on the carbon brush during operation of the motor so that it eliminates some bad accidents caused by the unilateral force acted on carbon brush, but the break-in process of the carbon brush with arcuate shape surface having teeth is so fast that motor noise is significantly reduced.

The brush bracket may be threadedly engaged in the brush cap.

### BRIEF DESCRIPTION OF THE DRAWINGS

The embodiments of the invention will now be further described with reference to the accompanying drawing.

Fig.1 is a schematic viewing showing the structure according to the invention.

Fig.2 is a schematic viewing showing the structure of the back end cover.

Fig.3 is a schematic viewing showing the structure of the carbon brush with sloping shape contacting surface.

Fig.4 is a schematic viewing showing the structure of the carbon brush with arcuate shape contacting surface.

Fig.5 is a schematic viewing showing the structure of the carbon brush with teeth-arcuate shape contacting surface.

### DETAILED DESCRIPTION OF THE INVENTION

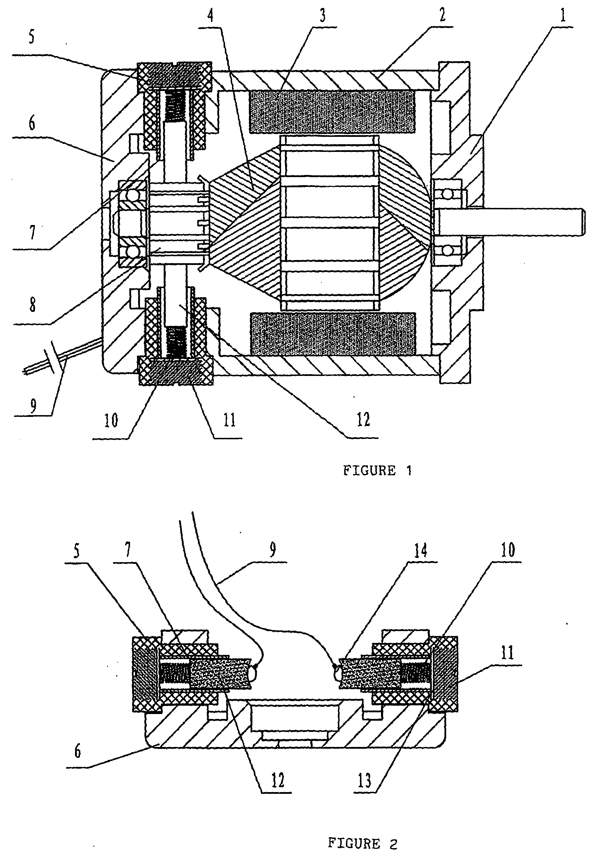

Now referring to fig.1 and fig.2, a DC motor with a externally mounted carbon brush, comprising a front end cover 1, a housing 2, magnetic steel 3, a rotor 4, a commutator 8 and a back end cover 6, wherein said back end cover 6 is provided with two mounting holes for brush brackets, said mounting holes for the brush brackets are mounting with two annular brush brackets 5 with identical structure, said brush brackets 5 are made of bakelite insulated material, inside which is provided with radial sliding tube 7 for mounting the carbon brush. Said sliding tube 7 for the carbon brush is made of copper material with excellent conductivity, which on one side, guides movement of the carbon brush, and on the other side, plays a role of coupling to the power source. The carbon brush 12 is mounted within sliding tube 7 for carbon brush and contacts with the commutator 8 on the rotor by a spring 10 biasing against a brush cap 11.

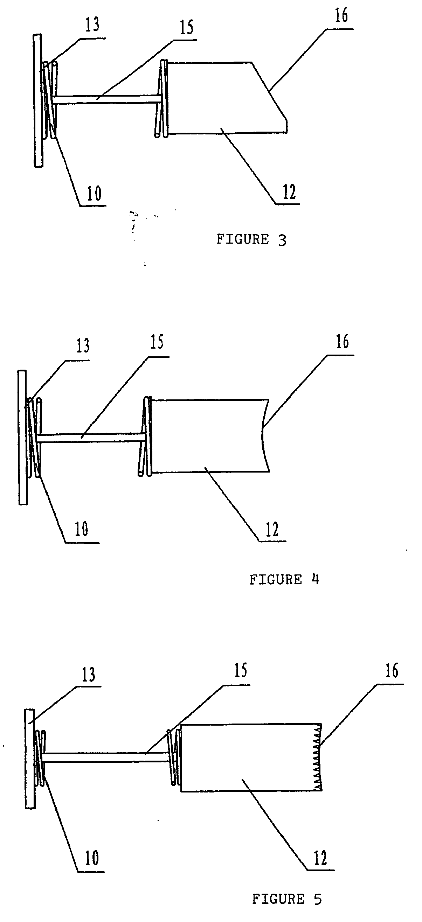

Referring to fig.3, 4 and 5, the outward end of said carbon brush 12 is connected with a copper brush shunt 15, the other end of said copper brush shunt 15 is connected with copper sheet 13 which is biased against the back end of the sliding tube 7 by the brush cap 11, the power lead wire 9 is lead out from a lead end 14 of the copper sheet at the outer wall of the sliding tube 7, then lead out from the motor through fixtures, such as the back end cover 6 or the housing 2 etc..

Because failure substantially exists in abnormal contact between the carbon brush and the commutator, the carbon brush with relatively large contacting pressure drop, especially with relatively steep volt-ampere is used to effectively improve commutation. Said contacting surface 16 between the carbon brush and the commutator may be formed into sloping shape surface as shown in the fig.3, or arcuate shape surface as shown in the fig.4, preferably an arcuate shape surface with zigzag shape teeth (as shown in the fig.5).

It is to be understood that embodiments as mentioned above are only the illustrations of the invention, but not the limitations of the invention, any possible other embodiments and modifications without departing from the principle of the invention may fall within the protected scope of the invention.

## Claims

1. A DC motor with externally mounted carbon brush, comprising a front end cover, a housing, magnetic steel, a rotor, a commutator and a back end cover, it is **characterized** that the outer wall of the back end cover is provided with two mounting holes for brush brackets which is mounted with annular brush brackets with identical structures, a radial sliding tube for carbon brush used to mount the carbon brush is located in said brackets, said carbon brush in the sliding tube for carbon brush contacts with the commutator by a spring biasing against the brush cap, the outward end thereof is connected with a copper sheet through a brush shunt, said copper sheet is held against the back end of the sliding tube by the copper sheet, the lead wire of power source is lead out from the outlet of the copper sheet at the outer wall of the sliding tube.

2. The DC motor according to claim 1, wherein said contacting surface between the carbon brush and the commutator is formed into the arcuate shape surface with teeth.

3. The DC motor according to claim 2, wherein The tooth shape of said arcuate shape surface with teeth may be any one of tooth shape, such as zigzag shape, undee shape, rectangular shape or the combination thereof.
